# EUROPEAN PATENT SPECIFICATION

(11) **EP 0 590 952 B1**
(45) Date of publication and mention of the grant of the patent: **09.12.1998**
(21) Application number: 93307715.8
(22) Date of filing: 29.09.1993
(51) Int. Cl.: H04B 1/16, H04B 1/08

(54) **Radio paging receiver using an air battery**
Funkrufempfänger mit Luftbatterie
Récepteur d'appel radio avec une batterie à air

(30) Priority: 30.09.1992 JP 260999/92
(43) Date of publication of application: 06.04.1994
(73) Proprietor: NEC CORPORATION, Tokyo (JP)
(72) Inventor: Morishima, Masaaki, c/o NEC Corporation, Tokyo (JP); Hirakata, Nobuyuki, c/o NEC Corporation, Tokyo (JP)
(74) Representative: Moir, Michael Christopher

(56) References cited:
- US-A- 5 093 212

## Description

### BACKGROUND OF THE INVENTION

### Field of the Invention

The present invention relates to a radio paging receiver using an air battery as the power source, and more particularly to a control mechanism for controlling the load current of the air battery.

### Description of the Related Art

Generally, a manganese battery, a lithium battery, a nickel-cadmium battery or the like is used as the power source of a radio paging receiver.

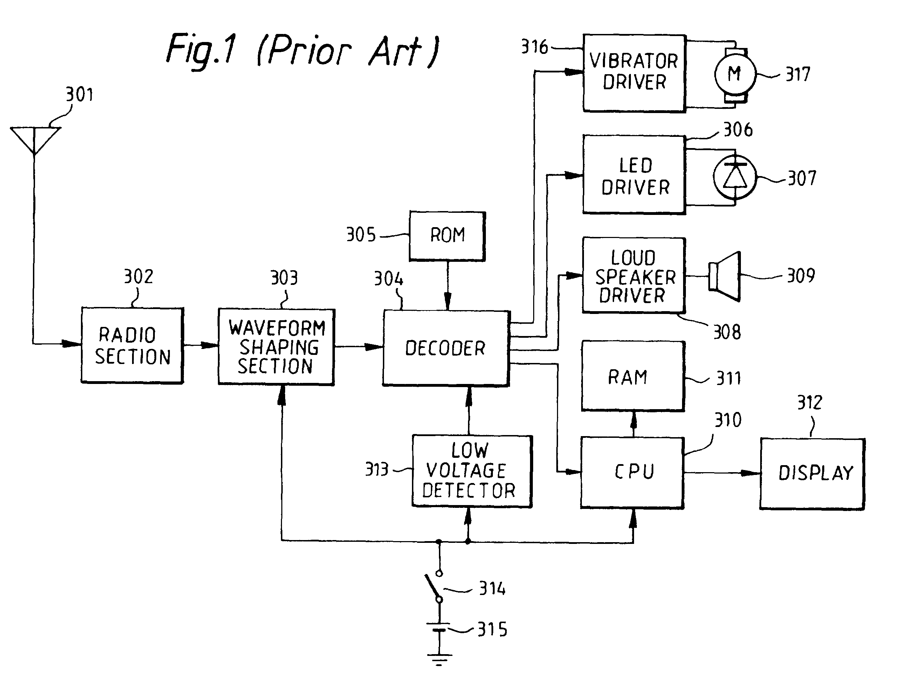

To better understand the present invention, a brief reference will be made to a prior art radio paging receiver using a manganese battery as the power source, shown in Fig. 1.

A radio signal received by an antenna 301 is amplified and demodulated by a radio section 302, and the received data are further sent to a decoder 304 via a wave form shaping section 303. If an individual paging number registered in a ROM 305 is found to be identical to the received paging number, the bearer of the radio paging receiver will be notified of the call by the actuation of a loud speaker 309, the actuation of a vibrator 317 and/or the intermittent lighting of an LED 307. Also, as required, the received message will be simultaneously displayed on a display 312 by a CPU 310 and stored in a RAM 311.

The actuation of the loud speaker is accomplished by a speaker driver 308, actuation of the vibrator 317 is accomplished by a vibrator driver 316, and the intermittent lighting of the LED 307 is accomplished by an LED driver 306, all under the control of the decoder 304. A power supply switch 314 turns on and off the supply of power to the radio paging receiver. A manganese battery is used as a power source 315.

A low voltage detecting circuit 313 notifies the decoder 304 of any drop in the source voltage below the minimum required voltage for having the radio section 302 stably operate (hereinafter referred to as the LVA voltage), and sounds the loud speaker 309 via the speaker driver 308 (hereinafter referred to as a low voltage alarm, which will continue to sound until the bearer of the receiver recognizes the alarm and performs an action, such as turning the switch off) to inform the bearer of the receiver to replace the battery. It is noted that the voltage for stable operation of the decoder 304 is about 1.0 volt, and the LVA voltage is set at about 1.1 volts, where no deterioration of sensitivity will occur.

In recent years, along with the increased variety and diversification of radio paging receivers, the variety of batteries used in the paging receivers has increases, with air batteries having joined the batteries already in conventional use. For example, air batteries are particularly useful in the card type paging receiver due to their slim profile.

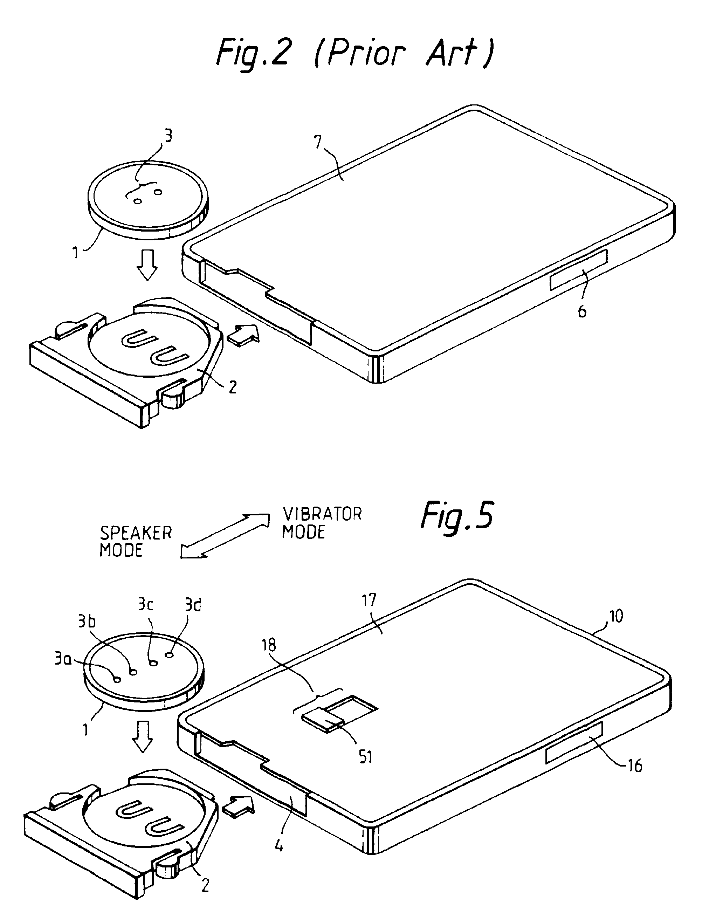

Fig. 2 shows one example of a conventional radio paging receiver using an air battery. An air battery 1 mounted on a battery holder 2 is inserted into a battery accommodating section 4, which is a part of the housing case 7 of the radio paging receiver, and used as the power source of the paging receiver. Reference numeral 6 denotes a power supply switch of the paging receiver. The air battery 1 has air holes 3 for allowing air to enter the battery and chemically react with a chemical substance inside the battery to thereby generate a voltage. For example, such an air battery using zinc is generally called "zinc air", and is supplied by DURACELL INC.

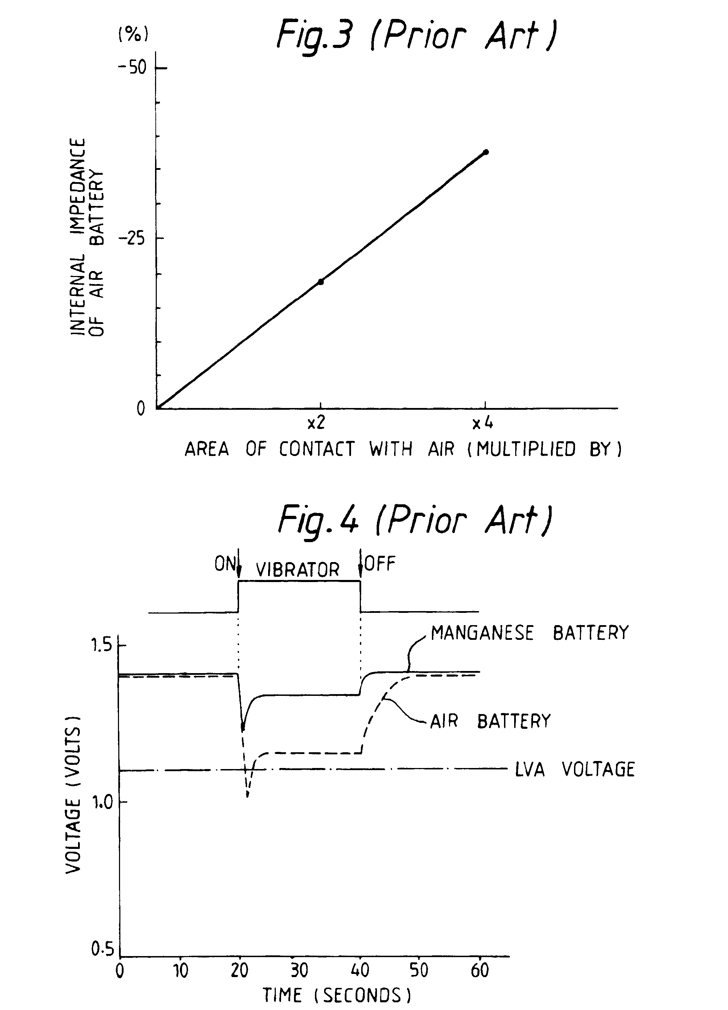

Fig. 3 illustrates the variations of the internal impedance of the air battery relative to the air contact area (i.e., the total area of the air holes in the battery which allows air to flow inside the battery). An air battery, as shown in Fig. 3, has the characteristic that its internal impedance varies with the air contact area and, attendantly, with the amount of air introduced through the air holes (as the air contact area doubles, the internal impedance decreases by about 20%). However, if the air contact area is increased, the service life of the air battery will be shortened due to battery discharge.

Fig. 4 comparatively illustrates the voltage drops of a manganese battery and an air battery, used as the power source of a radio paging receiver, when the vibrator is driven. As can be seen, a radio paging receiver using an air battery as the power source suffers a greater voltage drop when the vibrator is actuated than does a radio paging receiver using a manganese battery.

In this conventional radio paging receiver, when a circuit or unit requiring a large current, for instance a vibrator, is used, the operation of its radio section 302 is stopped because a large voltage drop occurs so that the battery voltage falls below the LVA voltage. Thus, if an air battery capable of actuating the vibrator is used, the air contact area should be greater so as to reduce the impedance and, attendantly the voltage drop. However, as noted above, while increased air flow reduces impedance it also has the negative effect of increased discharge even when a function is performed which draws a minimum current.

US 5,093,212 describes a sealing arrangement for regulating the discharge rate and maximum current of an air battery. Supply holes of the air battery are constantly exposed, and atmospheric gases which travel through a channel to the air chamber containing the air battery are regulated by selectively exposing openings in the channel using a slider mechanism.

It is an object of the present invention to provide a radio paging receiver which enables the use of the vibrator and the like, even when an air battery is used as the power source.

In accordance with the present invention there is provided a radio paging receiver for use with an air battery as a power source, the air battery having a plurality of air holes for permitting the introduction of air into said battery, characterised in that said receiver comprises adjusting means for engaging said battery to selectively vary the number of air holes exposed to air to adjust the amount of air introduced inside said battery through said plurality of air holes in accordance with the operational state of the radio paging receiver.

The above object and feature of this invention will become more apparent from the following detailed description when taken in conjunction with the attached drawings, in which:
Fig. 1 is a block diagram illustrating an example of prior art radio paging receiver;
Fig. 2 is an exploded perspective view of one example of a radio paging receiver according to the prior art using an air battery;
Fig. 3 is a diagram illustrating the variations of the internal impedance of the air battery relative to the air contact area;
Fig. 4 is a diagram comparatively illustrating the voltage drops of a manganese battery and an air battery;
Fig. 5 is an exploded perspective view of an embodiment of the present invention;
Fig. 6 is a perspective view of the mode selecting switch of the embodiment in detail;
Fig. 7 is a perspective view of the embodiment of the present invention and showing the state of speaker mode;
Fig. 8 is a partially sectional view of the embodiment showing the relation between the mode selection switch and the air holes of the air battery;
Fig. 9 is a perspective view of the embodiment of the present invention and showing the state of vibrator mode;
Fig. 10 is a block diagram of the embodiment of the present invention; and
Fig. 11 is a diagram comparatively illustrating the voltage drop of the air battery when the air holes are expanded and not expanded.

In the drawings, the same reference numerals denote the same structural elements.

### DESCRIPTION OF THE PREFERRED EMBODIMENT

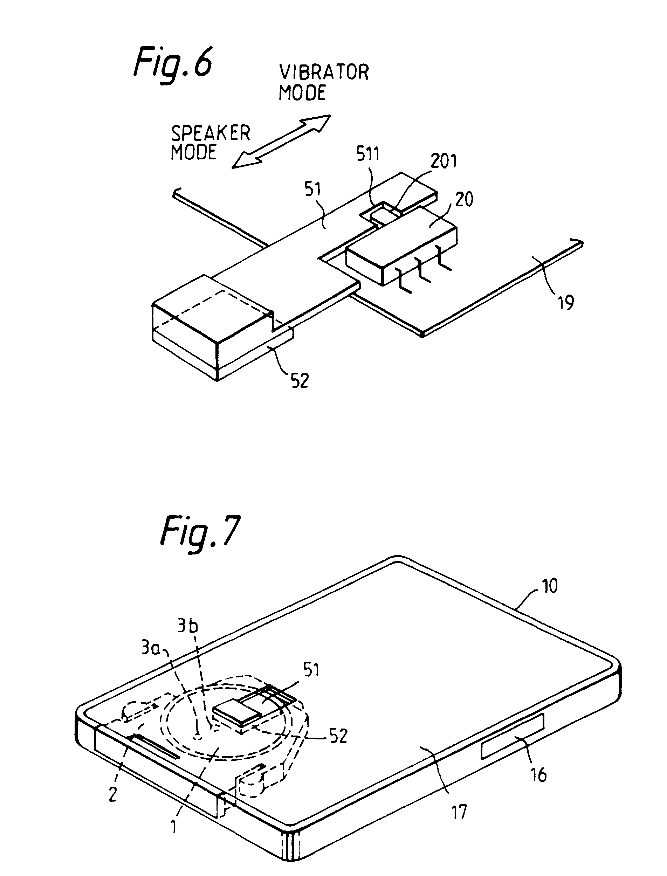

Referring to Figs. 5 to 9, a radio paging receiver 10 embodying the present invention is shown and comprises a housing case 17, a battery holder 2 and an air battery 1. The air battery 1 having air holes 3a, 3b, 3c and 3d, is mounted on the battery holder 2 which is received in a battery accommodating section 4. The housing case 17 has a power supply switch 16 and a slidable mode selecting switch 18 for selecting a speaker mode or a vibrator mode.

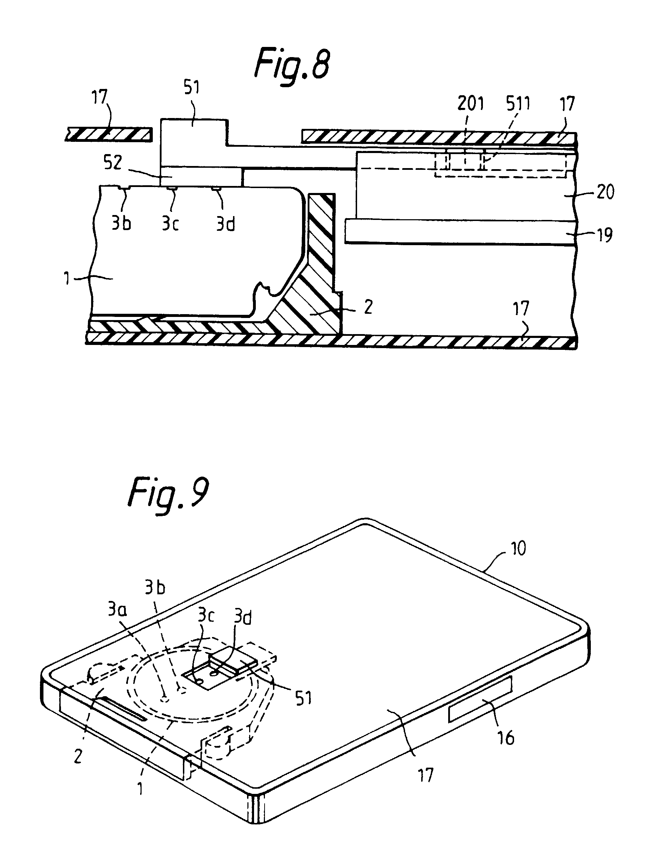

As shown in Figs. 6 and 8, the mode selecting switch 18 comprises a switch body 51 which is slidable in the housing case 17 and a rubber plate 52 which is adhered to a back face of the switch body 51. The rubber plate 52 is provided for covering air holes 3c and 3d of the air battery 1 in the speaker mode (described in more detail hereinafter). Further, one end of the switch body 51 is engaged with a slide switching device 20 on a printed circuit board 19 included in the housing case 17. The switching device 20 is provided for electrically switching between the speaker mode and the vibrator mode. Namely, a recess 511 provided at the end of the switch body 51 is engaged with a slidable switch 201 of the slide switching device 20. When the mode selecting switch 18 is slid by the user of the paging receiver, the slidable switch 201 of the switching device 20 is also slid in synchronization with the switch 18, so that the alert mode of the paging receiver is correspondingly switched.

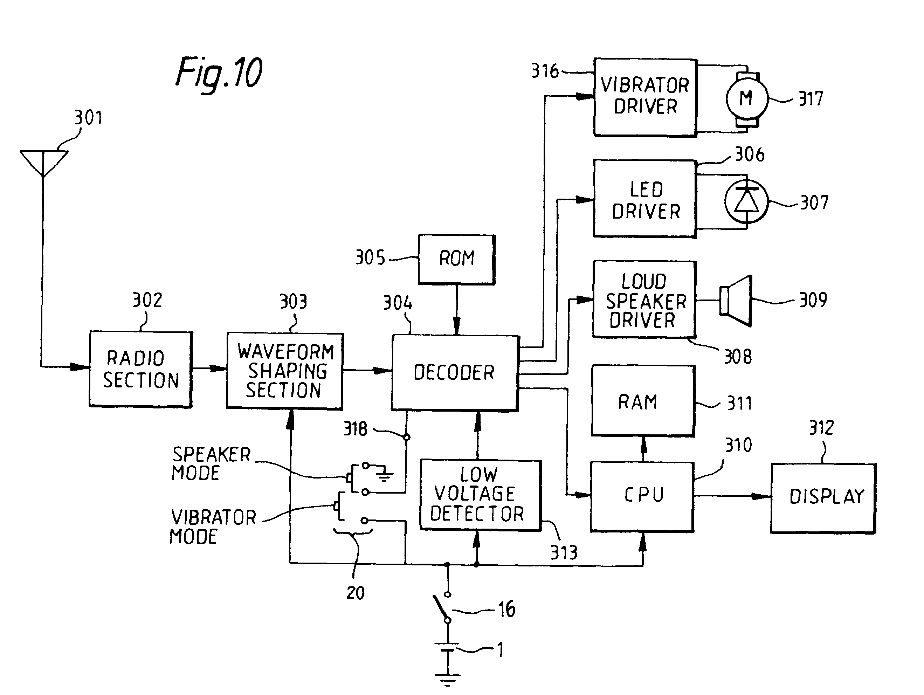

A block diagram of this embodiment is shown in Fig. 10, in which the same constituent element as in the prior art shown in Fig. 1 are assigned respectively the same numerals. The embodiment also includes the slide switching device 20 and a mode set terminal 318 connected to the decoder 304. The decoder 304 can detect the selected mode by the mode set terminal 318.

Next, with reference to Figs. 5 to 10, the operation of the embodiment will be described.

In the case in which notification to the bearer is carried out by the speaker 309 and the LED 307 (the vibrator is not used), the paging receiver is used in the speaker mode as shown in Figs. 5, 7 and 8. At that time, the mode set terminal 318 of the decoder 304 is connected to ground (Low level) by the switching device 20 so as to inform the decoder 304 (Fig. 10). In the speaker mode, although the air holes 3a and 3b of the air battery 1 are open, the air holes 3c and 3d are covered by the rubber plate 52 of the mode selecting switch 18. Therefore, air flows into the battery only through two air holes 3a and 3b, so that the air contact area is relatively small.

Next, when any notifying function requiring a large current (and an attendant large voltage drop of the air battery) such as the vibrator 317 is to be used, the mode selecting switch 18 is slid in the reverse direction (vibrator mode position) so that the rubber plate 52 no longer covers holes 3c and 3d of the air battery 1 (Fig. 9). Thus, when the mode selecting switch 18 is in the vibrator mode the number of open holes increases so that the air contact area also increases. Simultaneously, the switching device 20 is also switched to the vibrator mode position so as to interconnect the mode set terminal 318 and the power supply (High level) (Fig. 10). The decoder 304 detects this switching and controls the pager so as to notify the bearer using the vibrator 317 and the LED 307 when the paging receiver receives a message.

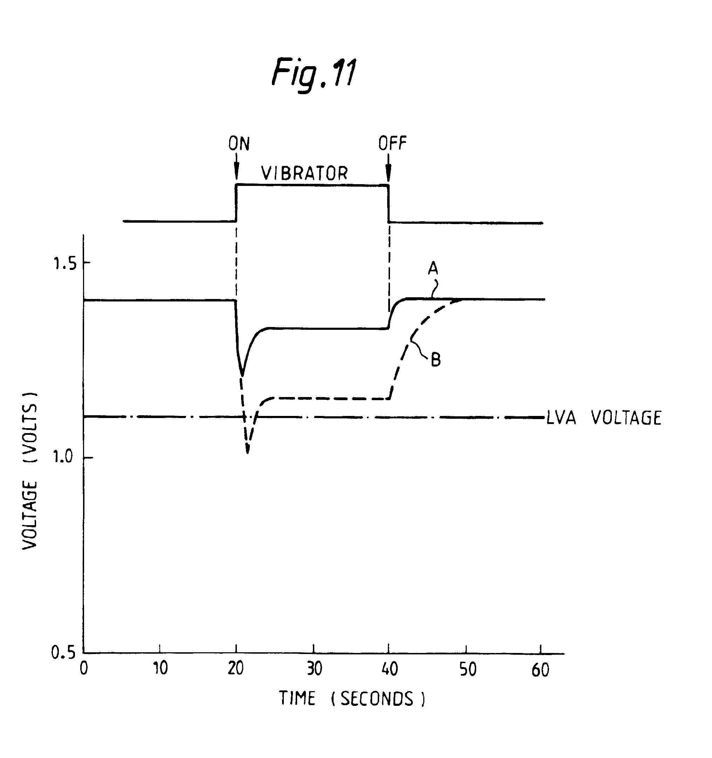

Fig. 11 illustrates the voltage drop occurring at the time when the vibrator 317 is driven with all four of the air holes opened (denoted by A) in comparison with the case of the prior art (denoted by B) in which only two of the air holes are opened. Referring to this figure, it is seen that the paging receiver of the embodiment suffers a smaller voltage drop than the paging receiver of the prior art.

As stated above, the present invention makes it possible to adjust the air contact area (the internal impedance of the air battery 1) by sliding the mode selecting switch 18 to vary the number of open air holes of the air battery 1. Thus, as the size of the air contact area is made adjustable according to the current use, a large current can be obtained without sacrificing the service life of the battery.

Although the present invention has been fully described by way of a preferred embodiment thereof with reference to the accompanying drawings (which description and drawings are by way of example only), various changes and modifications will be apparent to those having skill in this field. Therefore, unless these changes and modifications otherwise depart from the scope of the present invention as defined by the appended claims, they should be construed as included therein.

## Claims

1. A radio paging receiver (10) for use with an air battery (1) as a power source, the air battery having a plurality of air holes (3a, 3b, 3c, 3d) for permitting the introduction of air into said battery, characterised in that said receiver comprises adjusting means (18) for engaging said battery to selectively vary the number of air holes exposed to air to adjust the amount of air introduced inside said battery through said plurality of air holes in accordance with the operational state of the radio paging receiver.

2. A radio paging receiver as claimed in Claim 1, wherein said plurality of air holes define an air contact area of said battery, and wherein said adjusting means is arranged to adjust the air contact area of a battery by selectively varying the number of air holes exposed to air.

3. A radio paging receiver as claimed in Claim 1 or 2, including as a power source an air battery (1) having a plurality of air holes (3a, 3b, 3c, 3d) for permitting the introduction of air into the battery.

4. A radio paging receiver as claimed in any preceding claim, further comprising notifying means for notifying a user of a received message, said notifying means including at least one of a loud speaker (309), an LED (307) and a vibrator (317), and wherein said adjusting means is interlocked with said notifying means.

5. A radio paging receiver as claimed in any of Claims 1 to 4, comprising:
notifying means (307, 309, 317) for notifying a user of a received message, said notifying means including at least two notification formats;
means (20) for selecting one of said notification formats;
said adjusting means being arranged to adjust the amount of air that flows inside said air battery through said holes in accordance with which one of said notification formats is selected by said selecting means.

6. A radio paging receiver as claimed in any preceding claim, wherein said adjusting means comprises a switch means (51) for selectively opening and closing at least one of said air holes.

7. A radio paging receiver as claimed in Claim 6, wherein the maximum current available to said receiver increases as the number of opened holes increases.

8. A radio paging receiver as claimed in Claim 5, wherein said adjusting means comprises cover means (52) for covering said holes, and wherein said amount of air that flows inside said battery is varied by changing the number of holes covered by said cover means (52).

9. A radio paging receiver as claimed in Claim 8, wherein said cover means (52) is interlocked with said selecting means (20).

## Patentansprüche

1. Funkpersonenrufempfänger (10) für Verwendung mit einer Luftbatterie (1) als Stromquelle, wobei die Luftbatterie eine Mehrzahl von Luftlöchern (3a, 3b, 3c, 3d) aufweist, um Einleiten von Luft in die Batterie zu ermöglichen, dadurch gekennzeichnet, daß der Empfänger Einstellmittel (18) für Eingriff mit der Batterie aufweist, um selektiv die Anzahl von Luftlöchern, die Luft ausgesetzt sind, zu verändern, um die Luftmenge, die in die Batterie durch die Vielzahl von Luftlöchern eingeführt wird, entsprechend dem Betriebszustand des Funkpersonenrufempfängers zu verändern.

2. Funkpersonenrufempfänger nach Anspruch 1, bei dem die Mehrzahl von Luftlöchern eine Luftkontaktfläche der Batterie definieren und bei dem die Einstellmittel so angeordnet sind, daß sie die Luftkontaktfläche der Batterie verändern, indem selektiv die Anzahl der Luft ausgesetzten Luftlöcher verändert wird.

3. Funkpersonenrufempfänger nach Anspruch 1 oder 2, der als Stromquelle eine Luftbatterie (1) mit einer Mehrzahl von Luftlöchern (3a, 3b, 3c, 3d) einschließt, um das Einführen von Luft in die Batterie zu ermöglichen.

4. Funkpersonenrufempfänger nach einem vorangehenden Anspruch, der weiter Benachrichtigungsmittel zum Benachrichtigen eines Benutzers von einer empfangenen Nachricht einschließt, wobei die Benachrichtigungsmittel wenigstens eines der Elemente Lautsprecher (309), LED (307) und Vibrator (317) einschließen, und wobei die Einstellmittel mit den Benachrichtigungsmitteln miteinander verzahnt sind.

5. Funkpersonenrufempfänger nach einem der Ansprüche 1 bis 4, der aufweist:
Benachrichtigungsmittel (307, 309, 317) zum Benachrichtigen eines Benutzers von einer empfangenen Nachricht, wobei die Benachrichtigungsmittel wenigstens zwei Benachrichtigungsformate einschließen;
Mittel (20) zum Auswählen eines der Benachrichtigungsformate;
wobei die Einstellmittel so ausgebildet sind, daß sie die Luftmenge, die in die Luftbatterie durch die Löcher strömt, entsprechend damit einstellen, welches der Benachrichtigungsformate durch die Auswählmittel ausgewählt ist.

6. Funkpersonenrufempfänger nach einem vorangehenden Anspruch, bei dem die Einstellmittel Schaltermittel (51) zum selektiven Öffnen und Schließen wenigstens eines der Luftlöcher aufweisen.

7. Funkpersonenrufempfänger nach Anspruch 6, bei dem der dem Empfänger zur Verfügung stehende Maximalstrom anwächst, wenn die Anzahl der geöffneten Löcher anwächst.

8. Funkpersonenrufempfänger nach Anspruch 5, bei dem die Einstellmittel Abdeckmittel (52) zum Abdecken der Löcher aufweisen und wobei die Luftmenge, die in die Batterie strömt, dadurch verändert wird, indem die Anzahl der Löcher verändert wird, die durch die Abdeckmittel (52) bedeckt werden.

9. Funkpersonenrufempfänger nach Anspruch 8, bei dem die Abdeckmittel (52) mit den Auswählmitteln (20) verzahnt sind.

## Revendications

1. Récepteur radio d'appel de personnes (10) destiné à être utilisé avec une batterie à dépolarisation par l'air (1) comme source de courant, la batterie à dépolarisation par l'air ayant une pluralité de trous d'air (3a, 3b, 3c, 3d) pour permettre l'introduction d'air dans ladite batterie, caractérisé en ce que ledit récepteur comprend des moyens de réglage (18) pour mettre en prise ladite batterie pour modifier de manière sélective le nombre de trous d'air exposés à l'air pour régler la quantité d'air introduite à l'intérieur de ladite batterie à travers ladite pluralité de trous d'air selon l'état opérationnel du récepteur radio d'appel de personnes.

2. Récepteur radio d'appel de personnes selon la revendication 1, dans lequel ladite pluralité de trous d'air définit une surface de contact avec l'air de ladite batterie, et dans lequel lesdits moyens de réglage sont conçus pour régler la surface de contact avec l'air d'une batterie en modifiant de manière sélective le nombre de trous d'air exposés à l'air.

3. Récepteur radio d'appel de personnes selon la revendication 1 ou 2, comprenant, comme source de courant, une batterie à dépolarisation par l'air (1) ayant une pluralité de trous d'air (3a, 3b, 3c, 3d) pour permettre l'introduction d'air dans la batterie.

4. Récepteur radio d'appel de personnes selon l'une quelconque des revendications précédentes, comprenant de plus des moyens d'avertissement pour avertir un utilisateur d'un message reçu, lesdits moyens de notification comprenant au moins un élément du groupe constitué par un haut-parleur (309), une LED (307), et un vibreur (317), et dans lequel lesdits moyens de réglage se verrouillent mutuellement avec lesdits moyens d'avertissement.

5. Récepteur radio d'appel de personnes selon l'une quelconque des revendications 1 à 4, comprenant :
des moyens d'avertissement (307, 309, 317) pour avertir un utilisateur d'un message reçu, lesdits moyens d'avertissement comprenant au moins deux formats d'avertissement ;
des moyens (20) pour sélectionner l'un desdits formats d'avertissement ;
lesdits moyens de réglage étant conçus pour régler la quantité d'air qui s'écoule à l'intérieur de ladite batterie à dépolarisation par l'air à travers lesdits trous selon celui desdits formats d'avertissement qui est sélectionné par lesdits moyens de sélection.

6. Récepteur radio d'appel de personnes selon l'une quelconque des revendications précédentes, dans lequel lesdits moyens de réglage comprennent des moyens formant commutateur (51) pour ouvrir et fermer de manière sélective au moins un desdits trous d'air.

7. Récepteur radio d'appel de personnes selon la revendication 6, dans lequel le courant maximal disponible pour ledit récepteur augmente lorsque le nombre de trous ouverts augmente.

8. Récepteur radio d'appel de personnes selon la revendication 5, dans lequel lesdits moyens de réglage comprennent des moyens formant couvercle (52) pour couvrir lesdits trous, et dans lequel ladite quantité d'air qui s'écoule à l'intérieur de ladite batterie est modifiée en changeant le nombre de trous couverts par lesdits moyens formant couvercle (52).

9. Récepteur radio d'appel de personnes selon la revendication 8, dans lequel lesdits moyens formant couvercle (52) se verrouillent mutuellement avec lesdits moyens de sélection (20).
